Europäisches Patentamt

**European Patent Office**

**Office européen des brevets**

(11) Publication number: **0 057 855**

A2

(12) **EUROPEAN PATENT APPLICATION**

(21) Application number: **82100556.8**

(22) Date of filing: **27.01.82**

(51) Int. Cl.³: **F 16 D 25/12**

(30) Priority: **06.02.81 JP 16591/81**

(43) Date of publication of application:
**18.08.82 Bulletin 82/33**

(84) Designated Contracting States:
**DE FR GB**

(71) Applicant: **NISSAN MOTOR COMPANY, LIMITED**
**No.2, Takara-cho, Kanagawa-ku**
**Yokohama City(JP)**

(72) Inventor: **Nozawa, Koji Ogikubo Plant of**
**Nissan Motor Co., Ltd. No. 3-5-1 Momoi**
**Suginami-ku Tokyo(JP)**

(74) Representative: **Patentanwälte Grünecker, Dr.**
**Kinkeldey, Dr. Stockmair, Dr. Schumann, Jakob, Dr.**
**Bezold Meister, Hilgers, Dr. Meyer-Plath**
**Maximilianstrasse 43**
**D-8000 München 22(DE)**

(54) **Fluid cylinder.**

(57) A fluid cylinder comprising first and second pistons (9, 10) and a thrust transmitting member (11) interposed therebetween. The thrust transmitting member (11) is joined with the pistons (9, 10) in a ball-and-socket joint-like manner so that only substantially concentric load is transmitted through the thrust transmitting member (11) to the first piston (9) even when the second piston (10) is subjected to eccentric load.

FIG.1

EP 0 057 855 A2

PATENTANWÄLTE
GRÜNECKER · DR. KINKELDEY · DR. STOCKMAIR
DR. SCHUMANN · JAKOB · DR. BEZOLD · MEISTER
HILGERS · DR. MEYER · RATH

0057855

# FLUID CYLINDER

## BACKGROUND OF THE INVENTION

### 1.  Field of the Invention

The present invention relates to fluid cylinders such as a clutch master cylinder or clutch operating cylinder for automotive clutch control.

### 2.  Description of the Prior Art

In a typical clutch master cylinder, a piston within a cylinder chamber is pushed by a push rod which is pivotally or swingably connected to a clutch pedal. For this sake, the piston is subjected to an eccentric load and tends to wear excessively at a particular portion or portions, i.e., abnormal wear tends to result in the piston and also in the wall of the cylinder chamber. When such abnormal wear is caused, a sealing cup mounted on the piston is likely to be caught in between the abnormal wear portions of the piston and the wall of the cylinder chamber to be damaged, thus deteriorating the durability of the sealing cup and possibly resulting in the leakage of the cylinder to eventually cause the malfunction of the clutch control system.

## SUMMARY OF THE INVENTION

In accordance with the present invention, there is provided a novel and improved fluid cylinder which comprises first and second pistons and a thrust transmitting member interposed therebetween. The first piston is received in a cylinder chamber to define a pressure chamber in which the fluid pressure can be raised or lowered in response to movement of the first piston. The thrust transmitting member is adapted to transmit thrust between the pistons in a concentric manner.

With the above structure, it is enabled that only substantially concentric load is transmitted through the thrust transmitting member to the first piston even when the second piston is subjected to eccentric load. The first piston is thus assuredly prevented from abnormal wear, enabling to overcome the foregoing problems inherent in the prior art device.

It is accordingly an object of the present invention to provide a novel and improved fluid cylinder which is free from the foregoing drawbacks of the prior art device of the described type.

It is another object of the present invention to provide a novel and improved fluid cylinder of the above described character which is quite durable and can provide a positive and assured operation over a prolonged period of usage.

## BRIEF DESCRIPTION OF THE DRAWINGS

The features and advantages of the fluid cylinder according to the present invention will become more clearly appreciated from the following description taken in conjunction with the accompanying drawings, in which:

Fig. 1 is a sectional view of a clutch master cylinder in accordance with an embodiment of the present invention; and

Fig. 2 is a sectional view of a clutch operating cylinder in accordance with another embodiment of the present invention.

## DESCRIPTION OF THE PREFERRED EMBODIMENTS

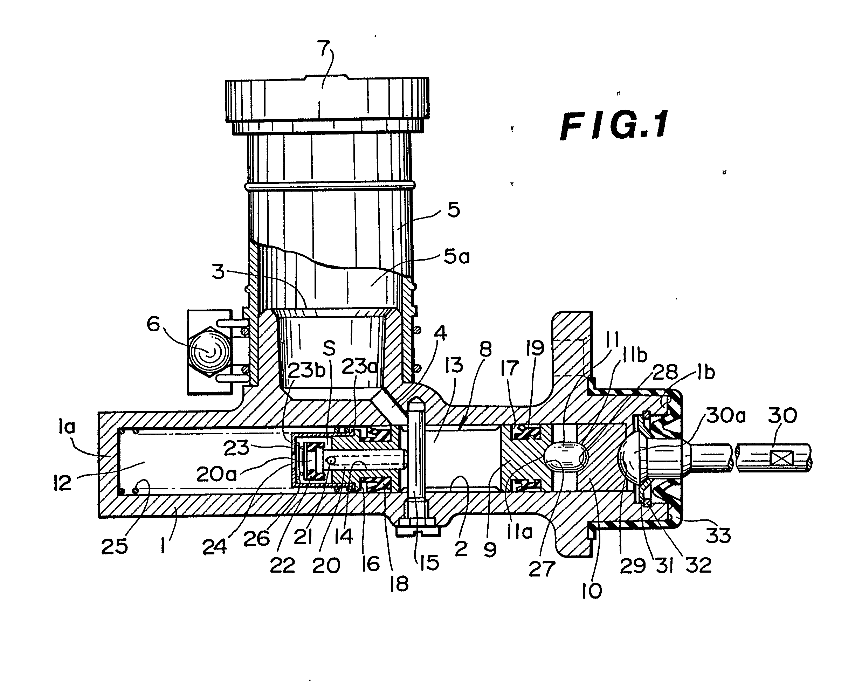

Referring first to Fig. 1, a clutch master cylinder according to an embodiment of the present invention is shown as comprising a cylinder body 1 formed with a cylinder chamber 2 closed at an end 1a and open at the other 1b. The cylinder body 1 is further formed with an integral reservoir portion 3, a supply port 4 providing communication between the reservoir portion 3 and the cylinder chamber 2, and an outlet port (not shown) communicating a clutch unit (not shown). A reservoir tank 5 is fitted on the reservoir portion 3 of the cylinder body 1 and fixed thereat by a clip 6. Indicated by the reference numeral 7 is a cover for the reservoir tank 5.

Generally indicated by the reference numeral 8 is a piston assembly which is shown as comprising a first piston 9, a second piston 10 and a thrust transmitting member 11 interposed between the first and second pistons 9 and 10. The thrust transmitting member 11 is in the form of a cylindrical pin smaller in diameter than the first and second pistons 9 and 10 and arranged concentric with the pistons. The first piston 9 is received in the cylinder chamber 2 to define a pressure chamber 12 and formed with an axially elongated, radial aperture 13 extending throughout the diametric length thereof. The first piston 9 is also formed with an axial hole 14 extending axially thereof between the aperture 13 and the end facing the pressure chamber 12. A stopper 15 in the form of a transverse pin is arranged to transverse the cylinder chamber 2 through the radial aperture 13 and fixedly attached to the cylinder body 1. With this stopper 15, the first piston 9 is prevented from rotating relative to the cylinder body 1 but axially movable though limitedly. That is, the stopper 15 is capable of limiting the axial movement of the first piston 9 by abuttingly engaging the opposed ends of the aperture 13.

The first piston 9 is also formed at the respective sides of the radial aperture 13 with a pair of grooves 16 and 17 within which a first primary cup 18 and a secondary cup 19 are received, respectively. The primary cup 18 provides a seal between the pressure chamber 12 and the reservoir chamber 5a whilst the secondary cup 19 provides a seal between the reservoir chamber 5a and the atmosphere. Within the above described axial hole 14 of the first piston 9, there is movably inserted a valve stem 20. The valve stem extends through the hole 14 to project therefrom at the opposed ends into the pressure chamber 12 and the radial aperture 13, respectively. The valve stem 20 is formed with a passage 21 having one end opening radially into the pressure chamber 12 and the other end opening into the radial aperture 13. The valve stem 20 has mounted at the end 20a thereof a ring-shaped sealing member 22 which is movable together with the stem and operative to obstruct communication between the passage 21 and the pressure chamber 12 when abuttingly engaged with the associated end of the first piston 9.

Designated by the reference numeral 23 is a tubular retainer having an outwardly flanged end 23a and an inwardly flanged end 23b formed with a central opening 24. The retainer 23 is mounted on the first piston 9 at the end thereof associated with the pressure chamber 12. Between the flanged end 23a of the retainer 23 and the closed end 1a of the cylinder chamber 2, there is interposed a return spring 25 in a compressed state. By this spring 25, the first piston 9 is adapted to be urged against the second piston 10 via the thrust transmitting member 11 at all times. Between the end 23b of the retainer 23 and the end 23a of the valve stem 20, there is interposed a spring 26 in a compressed state. By this spring 26, the valve stem 20 is always urged toward the radial aperture 13.

With the above valve mechanism, the communication between the reservoir chamber 5a and the pressure chamber 12 is selectively established or obstructed depending upon the axial position of the first piston 9 relative to the cylinder body 1. That is, when the valve stem 20 is in the operative condition abuttingly engaging the stopper 15 whilst allowing the sealing member 22 to be spaced from the first piston 9 to form a space S therebetween, the reservoir chamber 5a is communicated with the pressure chamber 12 through the supply port 4, the radial aperture 13 and the passage 21. In this instance, the passage 21 of the valve stem 20 is always communicated with the radial aperture 13 even when the valve stem 20 is abuttingly engaged with the stopper 15 since the contact of the flat end face of the valve stem 20 and the cylindrical face of the stopper 15 is a line contact. When the first piston 9 is then displaced leftwardly in the drawing, the valve stem 20 is still kept engaged with the stopper 15 by the urge of the spring 26 until the sealing member 22 is brought into engagement with the end of the first piston 9. When the sealing member 22 engages the first piston 9 to shut the space S, the communication between the reservoir chamber 5a and the pressure chamber 12 is obstructed.

The first and second pistons 9 and 10 have at the facing ends thereof concave, spherical sockets 27 and 28, respectively. Each socket 27 or 28 is adapted to form part of a sphere whose center is located on the center axis of the first or second piston 9 or 10. The thrust transmitting member 11 in the form of a cylindrical pin having convex, spherical ends 11a and 11b which are received in the corresponding sockets 27 and 28 of the first and second pistons 9 and 10, respectively. Each of the spherical ends 11a and 11b forms part of a sphere whose center is located on the center axis of the thrust transmitting member 11. The second piston 10 further has at the other end thereof a concave, spherical socket 29 receiving therein a convex, spherical end 30a of a push rod 30.

The other end of the push rod 30 is swingably or pivotally connected to a clutch pedal in the conventional manner, though not shown in the drawing. The thrust transmitting member 11 is thus joined with the first and second pistons 9 and 10 in a ball-and-socket joint-like manner so that only substantially concentric load is transmitted through the thrust transmitting member 11 to the first piston 9 even when the second piston 10 is subjected to eccentric load. Designated by the reference numeral 31 is a sealing ring for slidably supporting the push rod 30. The sealing ring 31 is prevented from slipping off by a stopper ring 32. 33 is a boot covering the open end 1b of the cylinder chamber 2.

The operation will now be described.

When there is no depression on the pedal, the push rod 30 and the piston assembly 8 assume the respective most rightward positions as shown in Fig. 1 and the piston assembly 8 is urged as a unit against the push rod 30 by the return spring 25. In this instance, the valve stem 20 is abuttingly engaged with the stopper 15 to provide a space S between the sealing member 22 and the first piston 9 whilst allowing the radially open mouth of the passage 21 to open into the pressure chamber 12. The reservoir chamber 5a is therefore communicated with the pressure chamber 12 through the supply port 4, the radial aperture 13 and the passage 21, and there is no pressure developed in the pressure chamber 12.

When the clutch pedal is depressed to push the push rod 30, the resulting pushing force is sequentially transmitted from the push rod 30 to the second piston 10, the thrust transmitting member 11 and the first piston 9, and the piston assembly 8 is caused to move as a unit leftwardly against the return spring 25. In this instance, since the push rod 30 is caused to swing about the end 30a engaged with the second piston 10, the second piston 10 is subjected to an eccentric load, i.e., a pushing force directed to intersect the center axis of the second piston 10 is applied from the push rod 30 to the second piston. However, due to the provision of the second piston 10 and the thrust transmitting member 11, only the thrust component of the load is transmitted from the thrust transmitting member 11 to the first piston 9, whilst the radial component of the load is absorbed by the second piston 10. The first piston 9 and the cooperating part of the inner wall of the cylinder chamber 2 are thus assuredly prevented from abnormal wear and therefore free from the foregoing problems inherent in the prior art device. That is, the primary cup 18 and the secondary cup 19 are assuredly prevented from being damaged and can provide an improved duration. In this instance, though the eccentric load will be able to cause abnormal wear of the second piston 10 and the cooperating part of the inner wall of the cylinder chamber 2, the primary and secondary cups 18 and 19 are not affected by that wear since the cups are not moved to that part of the cylinder chamber 2 in any operative conditions.

Upon leftward movement of the first piston 9, the retainer 23 moves correspondingly together with the first piston. However, since the spring 26 still continues to urge the valve stem 20 against the stopper 15, the valve stem 20 is held engaged with the stopper 15 until the sealing member 22 is brought into abutting engagement with the first piston 9. When the sealing member 22 and the first piston are abuttingly engaged with each other to shut the space S, the radially open mouth of the passage 21 is sealingly isolated from the pressure chamber 12. The communication between the reservoir chamber 5a and the pressure chamber 12 is thus obstructed. After that, when the push rod 30 is further urged to move the piston assembly 8 leftwardly, pressure is increasingly developed in the pressure chamber 12 and the developed pressure is supplied from the outlet port (not shown) to the operating cylinder (not shown) to operate the withdrawal lever (not shown) of the clutch unit. In the above manner, the clutch unit is disengaged when the clutch pedal is depressed.

When the depression on the clutch pedal is released, the piston assembly 8 is allowed to move rightwardly under the urge of the return spring 25 and the pressure developed in the pressure chamber 12. In this instance, the second piston 10 is also subjected to an eccentric load due to the reaction of the swinging push rod 30. The first piston 9, however, is not affected by that eccentric load for the same reasons as mentioned before. When the valve stem 20 comes to abuttingly engage the stopper 15 to provide a space S between the sealing member 22 and the first piston 9, communication is established between the pressure chamber 12 and the reservoir chamer 5a. As a result, the pressure in the pressure chamber 12 is lowered to the atmospheric pressure. In the above manner, the clutch unit is reengaged when the depression on the clutch pedal is released.

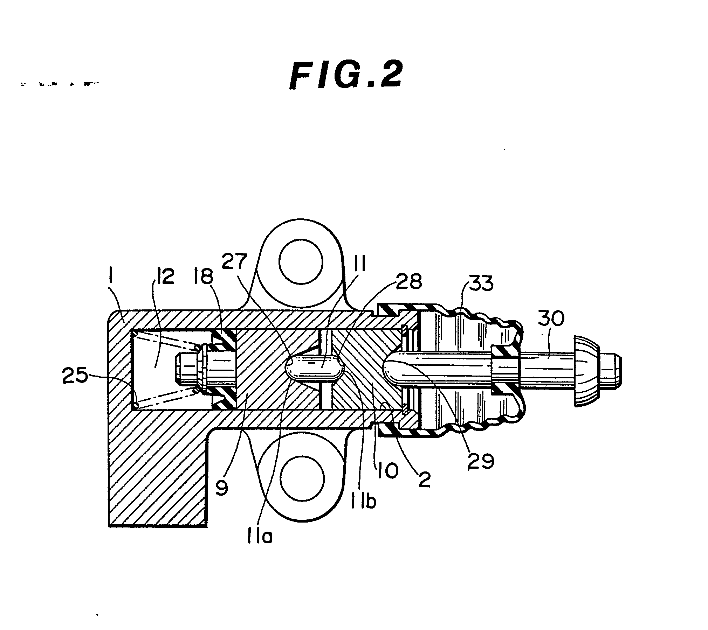

Fig. 2 shows another embodiment of the present invention.

This embodiment is an application of this invention to an operating cylinder for a hydraulic clutch control system and has basically the same construction and operation as those of the previous embodiment. In this embodiment, like or corresponding parts to those of the previous embodiment are designated by the like reference characters and the description thereof is omitted since it will be self-explanatory.

In the foregoing, it is to be noted that the push rod 30 may be connected through a clutch booster to the clutch pedal since in that case the present invention is still quite useful to solve the same problems.

Further, it is to be understood that the present invention is applicable to various fluid cylinders with a relief port, without mentionining brake master cylinders.

Further, while the thrust transmitting member 11 is shown as being in the form of a thick pin relative to its length, it may be in the form of a ball. Still furthermore, the concave and convex relationship in spherical shape between the pistons and the thrust transmitting member can be reversed.

Obviously, many variations and modifications of the present invention are possible in light of the above teachings. It is, therefore, to be understood that within the scope of the appended claims, the invention may be practiced otherwise than as specifically described.

WHAT IS CLAIMED IS:

1.  A fluid cylinder comprising a cylinder body (1) formed with a cylinder chamber (2) having a closed end (1a) and an open end (1b), a first piston (9) received in said cylinder chamber (2) to define a pressure chamber (12) in which the fluid pressure can be raised or lowered in response to movement of said first piston (9) toward or away from said closed end (1a), a second piston (10) received in said cylinder chamber (2) at a location nearer to said open end (1b) as compared with said first piston (9), and a thrust transmitting member (11) interposed between said first and second pistons (9,10) for transmitting thrust between said pistons (9,10) in a concentric manner.

2.  A fluid cylinder as set forth in Claim 1, further comprising a return spring (25) placed between said closed end (1a) and said first piston (9) so as to urge the first piston (9) toward said second piston (10) at all times.

3.  A fluid cylinder as set forth in Claim 1, in which said thrust transmitting member (11) is arranged in a concentric relation with said first and second pistons (9,10), and in which said first and second pistons (9,10) and said thrust transmitting member (11) having spherical, mating faces at which they are abuttingly engaged with each other.

4.  A fluid cylinder as set forth in Claim 1, in which said first and second pistons (9,10) have concave, spherical sockets (27,28) at the respective ends facing to each other, and in which said thrust transmitting member (11) is in the form of a cylindrical pin having convex, spherical ends (11a,11b) which are received in said spherical sockets (27,28), respectively.

5.  A fluid cylinder as set forth in Claim 4, in which said thrust transmitting member (11) is smaller in diameter than said first and second pistons (9,10).

6.  A fluid cylinder as set forth in Claim 4, in which each of said spherical sockets (27,28) forms part of a sphere whose center is located on the center axis of each of said first and second pistons (9,10).

7.  A fluid cylinder as set forth in Claim 4, in which each of said spherical ends (11a,11b) forms part of a sphere whose center is located on the center axis of said thrust transmitting member (11).

8.   A fluid cylinder as set forth in Claim 1, in which said second piston (10) further has a spherical socket (29) at the other end thereof for receiving input at said other end spherical socket (29).

9.   A fluid cylinder as set forth in Claim 1, in which said first piston (9) is received in said cylinder chamber (2) by interposing therebetween at least one sealing member (18;19) whilst said second piston (10) is received in the cylinder chamber (2) without interposing therebetween a sealing member.

FIG.1

0057855

# FIG.2